# EUROPEAN PATENT SPECIFICATION

(11) **EP 0 664 405 B1**
(45) Date of publication and mention of the grant of the patent: **02.06.1999**
(21) Application number: 95300277.1
(22) Date of filing: 18.01.1995
(51) Int. Cl.: F16B 19/00, F16B 21/18

(54) **Improvements in or relating to grab rings**
Verbesserungen an Verriegelungsringen
Améliorations apportées aux anneaux de verrouillage

(30) Priority: 19.01.1994 GB 9400912
(43) Date of publication of application: 26.07.1995
(73) Proprietor: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(56) References cited:
- CH-A- 445 800
- DE-A- 2 354 185
- DE-A- 4 128 007
- FR-A- 1 346 933
- FR-A- 2 102 518
- FR-A- 2 356 036
- FR-A- 2 547 369
- GB-A- 1 478 311

## Description

This invention relates to grab rings for locking cylindrical components in bores in further components.

It is known to mount a grab ring in a cylindrical bore for locking a cylindrical component in the bore which the ring is formed from a spring steel having an outer periphery mounted in a groove encircling the cylindrical bore and an inner peripheral portion which is obliquely angled to bear against the outer periphery of the cylindrical component to be locked in the bore to allow the component to be inserted into the bore and to lock the component against withdrawal from the bore. Such grab rings may have resilient fingers projecting from their inner peripheries to engage and grip the component inserted through the ring. It is also known to lock a component in a cylindrical bore or on a cylindrical shaft by means of a circlip of part annular form to snap into a groove encircling a bore or for a groove inserting a cylindrical component. The part annular form of the clip enables the clip to be sprung outwardly to disengage it from a groove in a cylindrical component or inwardly to disengage it from a groove in a cylindrical bore.

DE-A-2354185 discloses a partially annular ring of spring material for engaging in a groove in one component and having an angled cross-section with spaced radially projecting fingers formed around its outer periphery to engage in a bore of another component.

FR-A-2102518 discloses a metal sleeve mounted in a groove in a rod and having projections to engage the surface of a bore in a body in which the end of the rod is to be secured.

Such rings/sleeves have relatively narrow slots to allow the rings/sleeves to be open to engage over a shaft or a rod on which the ring or sleeve is to be mounted. If the ring is formed from a relatively stiff material to provide an effective grip between two components, it can be difficult to open the ring easily to enable it to be manipulated onto the rod or shaft on which it is to be mounted.

This invention provides a grab ring for locking a cylindrical component in a bore in another component, the ring being mountable in a groove in the cylindrical component and being formed from spring metal with an L-shaped cross-section, one limb of which is part-cylindrical and the other limb of which extends radially to the part-cylindrical limb, a free edge of the part-cylindrical limb having means extending along the edge to stiffen the ring, and a free edge of the radial limb having gripping means extending along the edge for gripping a surface of the other component, the ring further including a radial slot to allow the ring to be flexed open for location on a component, wherein the ring is formed to provide a hinge about an axis parallel to the ring axis to facilitate opening of the ring for assembly on a component and to bias the ring into its closed position.

Preferably the hinge in the ring is located diametrically opposite the slot.

It is further preferred that the slot extends over only a minor proportion of the circumference of the ring. Typically, the slot may extend over approximately one eighth of the circumference of the ring.

In any of the arrangements referred to above the gripping means may comprise a multiplicity of teeth formed integrally with the radial limb and projecting outwardly therefrom at an oblique angle to allow a component to slide past the ring in one direction but to be gripped in the opposite direction.

Further, the mounting means for the ring may include upstanding resilient legs formed at spaced locations around the free edge of the cylindrical limb.

Also in any of the above arrangement the ring may be encapsulated in a moulded plastics ring dimensioned to fit in the groove in the component.

In any of the above arrangements, the integral hinge may be formed so that the ring is biassed to snap open or closed from an intermediate position in its travel.

Also, in ay of the above arrangements means may be provided to close the radial slot in the ring once the ring has been assembled on the component.

The following is a description of a specific embodiment of the invention, reference being made to the accompanying drawings, in which:
Figure 1 is an elevation view of a form of grab ring to which the invention is applicable;
Figure 2 is a section on the line 2-2 of Figure 1;
Figure 3 is a cutaway view of a grab ring and grooved cylindrical member in which the ring is to be mounted;
Figure 4 is a similar view to Figure 3 showing the ring mounted in the groove;
Figure 5 shows the ring and component assembly inserted in a bore in a further component;
Figures 6 to 10 show similar views to Figures 1 to 5 with a modified form of the grab ring; and
Figure 11 shows the grab ring of Figure 1 modified to embody the present invention.

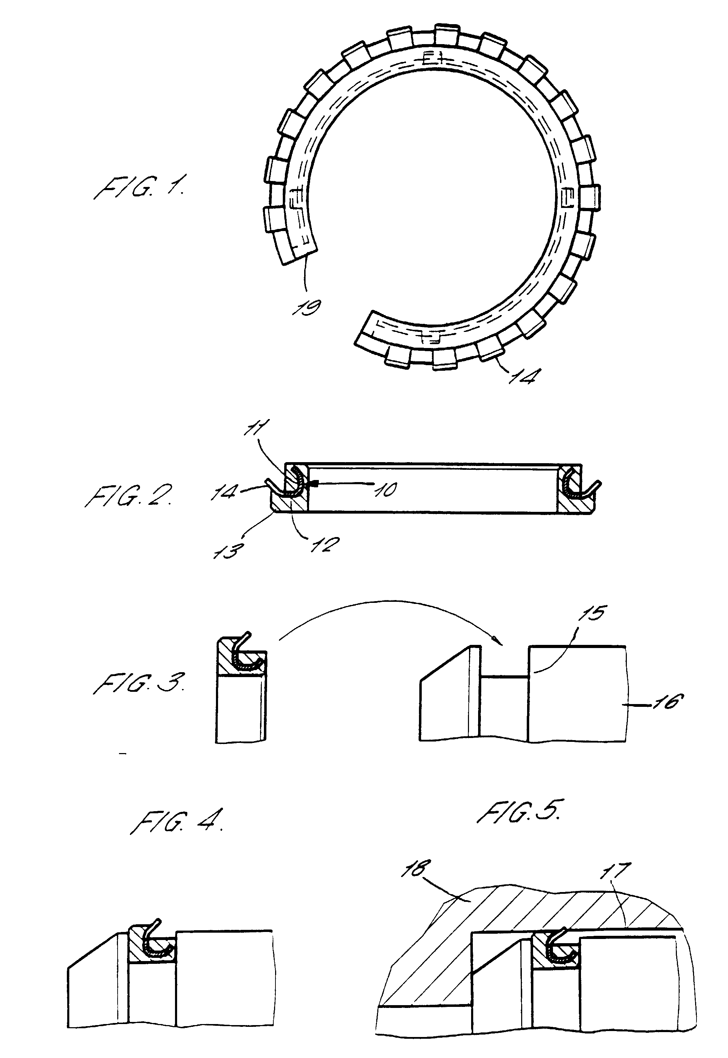

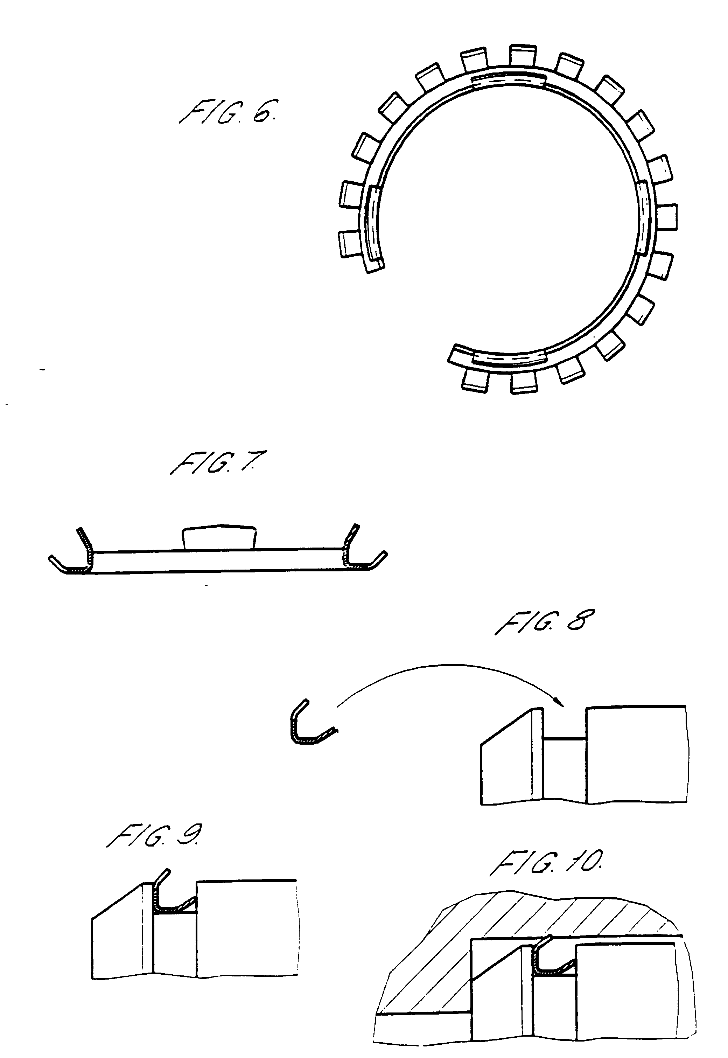

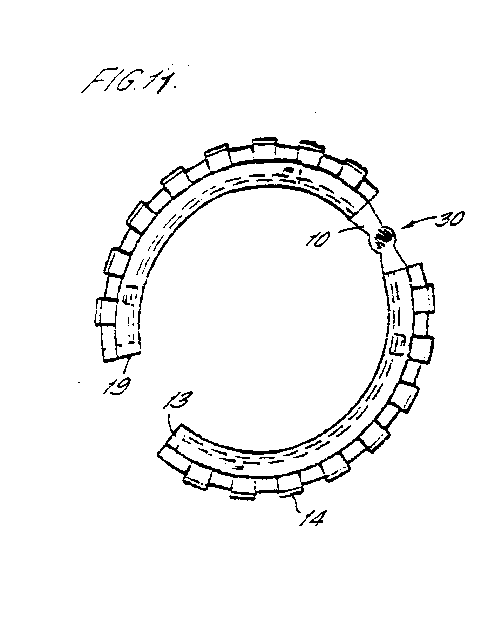

Referring firstly to the arrangement shown in Figures 1 to 5 of the drawings, a grab ring is illustrated for mounting in a groove of a cylindrical component which is intended to be received and locked in a bore of a further component.

The grab ring comprises an L-shaped cross-section core indicated generally at 10, one limb 11 of which is part cylindrical and the other limb 12 of which extends radially from the part cylindrical component. The core is encapsulated in a moulded plastics sleeve 13.

The free edge of the radial limb 12 is formed with a multiplicity of resilient teeth 14 around its periphery which are angled obliquely to the radial plane of the limb 12 to allow the ring to be slid along a bore in one direction but to resist movement in the opposite direction.

The free edge of the cylindrical element is formed with spaced obliquely angled legs to provide stiffness in the axial direction. Thus, when the ring is inserted in an annular groove 15 in a generally cylindrical component 16, the ring is held firmly in the groove.

The component 16 with the ring assembled on it can then be inserted in a bore 17 in a body 18. The obliquely angled teeth 14 allow the ring to slide into the bore but restrict extraction from the bore.

The ring is formed with a slot 19 part way around its circumference, the length of which is approximately one eighth of the total circumference of the ring. The slot permits the ring to be flexed inwardly and outwardly when assembling on a component as illustrated in Figure 3.

Figures 6 to 10 of the drawings show a similar arrangement except that the plastics moulding in which the metal ring is inserted is omitted leaving the metal element to be inserted directly in a groove in a component.

Reference is now made to the grab ring of Figure 11 which is generally similar to that of Figure 1 and like parts have been alotted the same reference numerals. The ring of Figure 11 is provided with a hinge point indicated generally at 30 directly opposite the slot to allow the ring to be opened for assembly around a component. In the region of the hinge point the plastics sleeve 13 is cut away and the hinge is formed by flattening the metal core 10 in the radial plane and by shaping the flattened portion to provide a fixed hinge axis and which the ring opens and closes. The core is shaped so that the ring is biased to snap open or closed from an intermediate position in its travel. In a further arrangement the core is cut away and the hinge is formed in the plastics sleeve.

According to a further feature, a closure may be provided for the radial slot for holding the ring closed. For example only a very narrow slot may be provided in the ring and the ends of the ring may be shaped to interengage and lock together.

## Claims

1. A grab ring for locking a cylindrical component in a bore in another component, the ring (10) being mountable in a groove in the cylindrical component and being formed from spring metal with an L-shaped cross-section, one limb (11) of which is part-cylindrical and the other limb (12) of which extends radially to the part-cylindrical limb, a free edge of the part-cylindrical limb having means along the edge to stiffen the ring, and a free edge of the radial limb having gripping means (14) extending along the edge for gripping a surface of said other component, the ring further including a radial slot (19) to allow the ring to be flexed open for location on a component, wherein the ring is formed to provide a hinge (30) about an axis parallel to the ring axis to facilitate opening of the ring for assembly on a component and to bias the ring into its closed position.

2. A grab ring as claimed in claim 1, characterised in that the hinge (30) in the ring (10) is located diametrically opposite the slot (19).

3. A grab ring as claimed in claim 1 or claim 2, characterised in that the slot (19) extends over a minor proportion of the circumference of the ring (16).

4. A grab ring as claimed in any of claims 1 to 3 characterised in that the gripping means (14) comprise a multiplicity of teeth formed integrally with the radial limb (12) and projecting outwardly therefrom at an oblique angle to allow a component to slide past the ring in one direction but to be gripped in the opposite direction.

5. A grab ring as claimed in claim 4, characterised in that the stiffening means for the ring (10) comprises upstanding resilient legs formed at spaced locations around the free edge of the cylindrical limb to stiffen the ring.

6. A grab ring as claimed in any of claims 1 to 5, characterised in that the L-shaped ring (10) is encapsulated in a moulded plastics ring (13) dimensioned to fit in the groove in the component.

7. A grab ring as claimed in any of the preceding claims, characterised in that the integral hinge (30) is formed so that the ring is biassed to snap open or closed from an intermediate position in its travel.

8. A grab ring as claimed in any of the preceding claims, characterised in that means are provided to close the radial slot (19) in the ring (10) once the ring has been assembled on the component.

## Patentansprüche

1. Verriegelungsring zum Verriegeln eines zylindrischen Bauteils in einer Bohrung in einem anderen Bauteil, wobei der Ring (10) in einer Nut in dem zylindrischen Bauteil montierbar ist und aus federndem Metall mit einem L-förmigen Querschnitt hergestellt ist, dessen einer Schenkel (11) teilzylindrisch ist und dessen anderer Schenkel (12) sich radial zum teilzylindrischen Schenkel erstreckt, wobei eine freie Kante des teilzylindrischen Schenkels entlang der Kante Mittel zum Versteifen des Rings aufweist, und eine freie Kante des radialen Schenkels Verriegelungsmittel (14) aufweist, die sich entlang der Kante erstrecken, um eine Fläche des anderen Bauteils zu verriegeln, wobei der Ring ferner einen Radialschlitz (19) aufweist, damit der Ring zum Anordnen auf einem Bauteil aufgespreizt werden kann, wobei der Ring so geformt ist, daß er ein Gelenk (30) um eine Achse parallel zur Ringachse vorsieht, um das Öffnen des Rings für das Montieren an einem Bauteil zu erleichtern, und um den Ring in seine geschlossene Position vorzuspannen.

2. Verriegelungsring nach Anspruch 1,
dadurch **gekennzeichnet** , daß das Gelenk (30) im Ring (10) diametral gegenüber dem Schlitz (19) liegt.

3. Verriegelungsring nach Anspruch 1 oder 2,
dadurch **gekennzeichnet,** daß der Schlitz (19) sich über einen kleinen Teil des Umfangs des Rings (16) erstreckt.

4. Verriegelungsring nach einem der Ansprüche 1 bis 3,
dadurch **gekennzeichnet**, daß die Verriegelungsmittel (14) eine Vielzahl von Zähnen aufweisen, die einstückig mit dem Radialschenkel (12) ausgebildet sind und an diesem nach außen in einem schiefen Winkel vorstehen, damit ein Bauteil in einer Richtung über den Ring geschoben werden kann, aber in der entgegengesetzten Richtung verriegelt ist.

5. Verriegelungsring nach Anspruch 4,
dadurch **gekennzeichnet**, daß die Mittel zum Versteifen des Rings hochstehende federnde Schenkel sind, die in Abständen um die freie Kante des zylindrischen Schenkels zum Versteifen des Rings angeordnet sind.

6. Verriegelungsring nach einem der Ansprüche 1 bis 5,
dadurch **gekennzeichnet**, daß der L-förmige Ring (10) in einem in der Form hergestellten Kunststoffring (13) eingebettet ist, der so dimensioniert ist, daß er in die Nut im Bauteil paßt.

7. Verriegelungsring nach einem der vorstehenden Ansprüche,
dadurch **gekennzeichnet**, daß das einstückig ausgebildete Gelenk (30) so ausgebildet ist, daß der Ring vorgespannt ist, um bei seinem Weg aus einer mittleren Position auf- oder zuzuschnappen.

8. Verriegelungsring nach einem der vorstehenden Ansprüche,
dadurch **gekennzeichnet**, daß Mittel vorgesehen sind, um den radialen Schlitz (19) im Ring (10) zu schließen, wenn der Ring am Bauteil montiert ist.

## Revendications

1. Anneau de verrouillage pour bloquer un composant cylindrique dans un alésage d'un autre composant, l'anneau (10) pouvant être monté dans une gorge du composant cylindrique et étant constitué d'un métal élastique ayant section en forme de L, dont une aile (11) est en forme de portion de cylindre et dont l'autre aile (12) s'étend radialement jusqu'à l'aile partiellement cylindrique, un bord libre de l'aile partiellement cylindrique comportant des moyens le long du bord pour renforcer l'anneau, et un bord libre de l'aile radiale comportant des moyens d'accrochage (14) s'étendant le long du bord pour serrer une surface dudit autre composant, l'anneau comportant également une fente radiale (19) qui permet à l'anneau de s'ouvrir par fléchissement pour se placer sur un composant, l'anneau étant conformé pour comporter une charnière (30) pivotant autour d'un axe parallèle à l'axe de l'anneau afin de faciliter l'ouverture de l'anneau lors de son assemblage avec un composant et de solliciter l'anneau dans sa position fermée.

2. Anneau de verrouillage selon la revendication 1, caractérisé en ce que la charnière (30) de l'anneau (10) est diamétralement opposée à la fente (19).

3. Anneau de verrouillage selon la revendication 1 ou 2, caractérisé en ce que la fente (19) s'étend sur une portion réduite de la circonférence de l'anneau (16).

4. Anneau de verrouillage selon l'une quelconque des revendications 1 à 3, caractérisé en ce que les moyens d'accrochage (14) comprennent une pluralité de dents formant partie intégrante de l'aile radiale (12) et faisant saillie vers l'extérieur de celle-ci selon un angle oblique pour permettre le glissement d'un composant au-delà de l'anneau dans une direction et son verrouillage dans la direction opposée.

5. Anneau de verrouillage selon la revendication 4, caractérisé en ce que les moyens de renforcement de l'anneau (10) comprennent des pattes droites flexibles disposées de façon espacée autour du bord libre de l'aile cylindrique afin de renforcer l'anneau.

6. Anneau de verrouillage selon l'une quelconque des revendications 1 à 5, caractérisé en ce que l'anneau (10) en forme de L est enveloppé dans un anneau en plastique moulé (13) dimensionné de façon à s'adapter dans la gorge du composant.

7. Anneau de verrouillage selon l'une quelconque des revendications précédentes, caractérisé en ce que la charnière en une seule pièce (30) est formée de façon que l'anneau est sollicité pour s'encliqueter ouvert ou fermé à partir d'une position intermédiaire au cours de sa course.

8. Anneau de verrouillage selon l'une quelconque des revendications précédentes, caractérisé en ce que des moyens sont fournis pour obturer la fente radiale (19) dans l'anneau (10) une fois que l'anneau a été assemblé sur le composant.
